# EUROPÄISCHE PATENTSCHRIFT

(11) **EP 3 707 014 B1**
(45) Veröffentlichungstag und Bekanntmachung des Hinweises auf die Patenterteilung: **29.09.2021**
(21) Anmeldenummer: 18746910.1
(22) Anmeldetag: 26.07.2018
(51) Int. Cl.: B60C 11/16

(54) **SPIKE ZUM VERANKERN IN EINEM SPIKELOCH EINES LAUFSTREIFENS EINES FAHRZEUGLUFTREIFENS**
TIRE STUD FOR ANCHORING IN A TIRE STUD HOLE OF A TREAD OF A PNEUMATIC VEHICLE TIRE
CRAMPON DESTINÉ À ÊTRE ANCRÉ DANS UN TROU DE CRAMPON D'UNE BANDE DE ROULEMENT D'UN PNEUMATIQUE DE VÉHICULE

(30) Priorität: 09.11.2017 DE 102017219915
(43) Veröffentlichungstag der Anmeldung: 16.09.2020
(73) Patentinhaber: Continental Reifen Deutschland GmbH, 30165 Hannover (DE)
(72) Erfinder: SCHLITTENHARD, Jan, 30419 Hannover (DE)
(74) Vertreter: Continental Corporation
(86) Internationale Anmeldenummer: PCT/EP2018/070285
(87) Internationale Veröffentlichungsnummer: WO 2019/091609

(56) Entgegenhaltungen:
- DE-A1- 2 202 373
- DE-A1-102015 223 091
- JP-U- S51 158 005
- RU-C1- 2 106 263

## Beschreibung

Die Erfindung betrifft einen Spike zum Verankern in einem Spikeloch eines Laufstreifens eines Fahrzeugluftreifens mit einem nicht metallischen Spikekörper und einem im Spikekörper verankerten Spikepin aus Hartmetall, welcher mit seinem einen Endabschnitt den Spikekörper überragt und mit seinem zweiten Endabschnitt innerhalb des Spikekörpers in einem ersten Spikekörper-Teil aus einem ersten, nicht metallischen Material verankert ist, wobei der innerhalb des Spikekörpers zwischen den Endabschnitten verlaufende Abschnitt des Spikepins in zumindest einem weiteren Spikekörper-Teil aus einem zweiten, nicht metallischen Material gehalten ist.

Spikes werden üblicherweise durch eine Kombination aus Formschluss und Klemmung in den Spikelöchern des Laufstreifens von Fahrzeugluftreifen gehalten. Herkömmliche Spikes bestehen aus einem Spikekörper aus Aluminium oder Stahl, in welchem der über die Laufstreifenoberfläche hervorstehende Spikepin, der aus Hartmetall besteht, gehalten ist.

Es ist üblich, auf winterlichen Fahrbahnen zur Erhöhung der Verkehrssicherheit Streugut zu verwenden. Der Einsatz von Sand wurde in den letzten Jahren zugunsten von Streusplit reduziert, da Sand dazu neigt, von Reifen zu Staub oder zu Feinstaub zermahlen zu werden, welcher zum Schutz der Gesundheit der Bevölkerung reduziert oder vermieden werden soll. Der Einsatz von Streusplit führt jedoch dazu, dass die üblichen, in Fahrzeugluftreifen eingesetzten Spikes verstärkt abgenützt werden, insbesondere wenn ihr Spikekörper aus Aluminium besteht.

Es ist daher bereits vorgeschlagen worden, Spikes mit Spikekörpern aus Gummi oder aus Kunststoff zu verwenden. Aus der DE 2 202 373 A1 ist ein Kunststoff-Spike bekannt, welcher aus einem Hartmetallstift und einer Kunststoffummantelung besteht, wobei der Hartmetallstift mittels Ultraschallschwingungen in den Kunststoffschaft eingebettet wird. Bei weiteren, bekannten Herstellungsmethoden für Kunststoffspikes wird der Hartmetallpin mit einem thermoplastischen Kunststoff umspritzt.

Aus der JP S51 158 005 U ist ein Spike mit einem Spikekörper und einem in diesem verankerten Spikepin bekannt. Der Spikekörper setzt sich aus einem Fußflansch, einem taillierten Mittelteil und einem kegelstumpfförmigen Oberflansch zusammen. Der Oberflansch weist eine Mantelfläche auf, welche, im Querschnitt betrachtet, unter einem Winkel von 5° bis 15° relativ zu Spikehochachse verläuft. Ferner weist der im Oberflansch befindliche Abschnitt des Spikepins an seinem äußeren Umfang ein Sägezahnprofil auf.

Die RU 2 106 263 C1 offenbart einen Spike mit einem Spikepin, welcher mit einer Kupferschicht ummantelt ist und sich in einer vorgeformten Hülse aus einem Thermoplast befindet. Ein solcher Spike soll einen guten Halt im Laufstreifen aufweisen.

Aus der WO 2017/0888995 A1 sind Spikes bekannt, bei welchen der Spikepin und/oder der aus Kunststoff oder Aluminium bestehende Fußflansch zumindest abschnittsweise in einen Gummimantel bzw. in Gummimaterial eingebettet ist bzw. sind. Die besonderen Vorteile dieser Ausführungen liegen in den grundsätzlichen Materialeigenschaften des Gummikörpers. Durch seine geringe Dichte von etwa 1 g/cm³ ist Gummi im Vergleich zu Aluminium und Stahl besonders leicht. Der Austausch von Aluminium und Stahl durch Gummi als Körpermaterial führt daher zu einer Reduktion des Spikegewichtes, welches sich besonders positiv auf den Straßenverschleiß und auf die Feinstaubbildung auswirkt. Der Straßenverschleiß wird hauptsächlich durch die Aufschlagenergie des Spikes bestimmt. Die elastischen Materialeigenschaften des Gummis haben noch weitere Vorteile. Zum einen dämpft das elastische Körpermaterial Stöße, sodass geringere Kräfte auf Steine in der Straßenoberfläche oder auf Streugutpartikel wirken. Somit reduzieren sich auch dadurch Straßenverschleiß und Feinstaubbildung. Darüber hinaus sind Spikekörper aus Gummi jenen aus Aluminium oder Stahl im Abriebverhalten überlegen, da sie ein komplett anderes Verschleißverhalten aufweisen. Werden Steine des Straßenbelags und insbesondere Split von Streugut in der Nähe eines konventionellen Spikes vom Reifen überrollt, so verformt sich das Profil im Laufstreifen stark und weicht zur Seite aus. Der fixierte, starre Spike kann diesen Ausweichbewegungen nicht folgen. Dadurch bildet sich ein Spalt zwischen Spike und Gummi, welcher die Ober- und Mantelfläche des Spikekörpers dem abrasiven Angriff von Steinen aussetzt. Da Steine im Straßenbelag und Split üblicherweise eine höhere Härte als Aluminium und sogar als Stahl aufweisen, wird ein Spikekörper aus Aluminium oder Stahl stark abgeschliffen, wodurch sich die Spikekörperhöhe und der Durchmesser des Spikekörpers verringern. Dies führt dazu, dass die Spikelochkantenbereiche einem schneidenden Abrieb ausgesetzt sind. Sie erodieren, wodurch sich der Spalt zwischen Spike und umliegender Gummimatrix vergrößert. Dies begünstigt das Eindringen von Sand und kleineren Steinen, wodurch der Spikekörperabrieb weiter beschleunigt wird. Als Folge davon reduzieren sich die seitlichen Haltekräfte auf den Spike, was zu einer Reduktion der Wintereigenschaften durch starkes Verkippen, im schlimmsten Fall zum Spikeverlust, führt.

Der Erfindung liegt die Aufgabe zugrunde, bei einem Spike der eingangs genannten Art Maßnahmen zu treffen, mit welchen sich das Gewicht des Spikes gegenüber den bekannten Spikes, insbesondere auch jenen mit einem Spikekörper aus Gummi, noch weiter verringern lässt, um derart den Straßenverschleiß und die Feinstaubbildung noch weiter zu reduzieren, wobei die Griffeigenschaften der Spikes auf eisigem Untergrund, ihre "Eisperformance", sowie eine dauerhaltbare Verankerung des Spikes im Laufstreifen auf einem hohen Niveau erhalten bleiben sollen.

Gelöst wird die gestellte Aufgabe erfindungsgemäß dadurch, dass der erste Spikekörper-Teil, in welchem der Endabschnitt des Spikepins verankert ist, aus thermoplastischem oder duroplastischem Kunststoff oder aus Hartgummi besteht, wobei der weitere Spikekörper-Teil, in welchem der innerhalb des Spikekörpers zwischen den Endabschnitten des Spikepins verlaufende Abschnitt des Spikepins gehalten ist, aus abrieb- und schnittbeständigem Gummimaterial oder aus einem thermoplastischen Vulkanisat besteht.

Ein erfindungsgemäß ausgeführter Spike enthält daher, bis auf den Pin aus Hartmetall, keine metallischen Bestandteile. Der im Spikekörper befindliche Endabschnitt des Spikepins ist in einem Material hoher Härte mit einem geringen spezifischen Gewicht und auf dauerhaltbare Weise verankert. Das Material des Spikekörpers in jenem Bereich, der bei in einem Laufstreifen eingesetzten Spike an die Laufstreifenperipherie anschließt, besteht aus einem abriebbeständigen und schnittfesten Gummimaterial oder aus einem thermoplastischen Vulkanisat. Ein erfindungsgemäßer Spike weist daher ein für einen geringen Straßenverschleiß und eine geringe Feinstaubbildung vorteilhaftes geringes Gewicht auf. Durch das Gummimaterial bzw. das zu Gummimaterial sehr ähnliche thermoplastische Vulkanisat im oberen Spikekörperbereich passt sich der Abrieb des Spikekörpers im Wesentlichen an jenen der umgebenden Gummimatrix des Laufstreifens an. Es bilden sich keine Spalten zwischen dem Spikekörper und dem Laufstreifenmaterial, wodurch der Spike über die Lebensdauer des Reifens seine Wintereigenschaften bzw. seine Eisperformance behält.

Bei einer bevorzugten Ausführungsvariante der Erfindung ist der erste Spikekörper-Teil, in welchen der Endabschnitt des Spikepins verankert ist, ein Einsatz im Spikekörper, welcher von Gummimaterial oder von thermoplastischem Vulkanisat umhüllt ist. Bei dieser Ausführungsvariante kann der Spikepin auf besonders haltbare Weise im Spikekörper verankert werden.

Bevorzugt weist bei dieser Ausführungsvariante der Einsatz einen Fußteil und einen Pinhalter auf, wobei der Fußteil gemeinsam mit seiner Umhüllung den Fußflansch des Spikekörpers bildet.

Um den Einsatz auf besonders haltbare Weise im Spikekörper zu verankern, ist es vorteilhaft, wenn der Pinhalter mit zumindest einem Hinterschnitt versehen ist und/oder wenn der Pinhalter pilzkopfartig gestaltet ist und zum Fußteil einen rillenartig ausgebildeten Übergangsbereich aufweist.

Bei einer weiteren Ausführungsvariante besteht der Spikekörper aus einem Oberteil und einem Unterteil, wobei der Unterteil mit dem Fußflansch einteilig ausgeführt ist und der erste Spikekörper-Teil ist, in welchen der Endabschnitt des Spikepins verankert ist. Diese Ausführungsvariante zeichnet sich durch einen besonders einfachen Aufbau aus.

Vorzugsweise ist bei dieser Ausführungsvariante der weitere Spikekörper-Teil, in welchem der zwischen den Endabschnitten des Spikepins verlaufende Abschnitt des Spikepins gehalten ist, der Oberteil des Spikekörpers. Bevorzugt sind ferner Ausführungsvarianten, bei welchen der Oberteil des Spikekörpers entweder aus einem einzigen Material oder aus zumindest zwei übereinander angeordneten Schichten aus unterschiedlichen Materialien besteht. Durch Schichten aus unterschiedlichen Materialien kann auf die Art der Kraftübertragung vom Spikepin auf den Spikekörper Einfluss genommen werden.

Bei einer bevorzugten Ausführung verläuft die Trennfläche zwischen dem Ober- und dem Unterteil senkrecht zum Spikepin. Möglich sind jedoch auch Ausführungsvarianten, bei welchen die Trennfläche zwischen dem Ober- und dem Unterteil bezüglich der Erstreckung des Spikepins schräg verläuft, insbesondere unter einem Winkel von 5° bis 30° zur Horizontalen.

Bei einer senkrecht zum Spikepin verlaufenden Trennfläche zwischen dem Ober- und dem Unterteil weist der Unterteil bevorzugt eine Höhe von 30 % bis 40 % der Spikehöhe auf.

Um eine optimale Verankerung des Spikepins im Spikekörper sicherzustellen, ist es weiters vorteilhaft, wenn der im Spikekörper verankerte zweite Endabschnitt des Spikepins mit zumindest einem Verankerungselement versehen ist.

Das thermoplastische Kunststoffmaterial im Spikekörper ist bevorzugt zumindest ein Thermoplast aus der Gruppe Acrylnitril-Butadien-Styrol-Copolymer, Polyethylen, Polypropylen, Polystyrol und Polyamid.

Der duroplastische Kunststoff ist bevorzugt Phenolharz, Epoxidharz oder Polyesterharz.

Der Thermoplast bzw. die Thermoplaste des thermoplastischen Vulkanisates stammt bzw. stammen bevorzugt aus der Gruppe Polyurethan, Polypropylen, Polystyrol, Polyamid und Acrylnitril-Butadien-Styrol-Copolymer. Bevorzugt liegt ferner dem Elastomer des thermoplastischen Vulkanisates eine Kautschukmischung zugrunde, welche als Kautschuk(e) zumindest einen der Kautschuke aus der Gruppe Naturkautschuk, synthetisches Polyisopren, Polybutadien, Styrol-Butadien-Kautschuk und Nitril-Butadien-Kautschuk enthält.

Weitere Merkmale, Vorteile und Einzelheiten der Erfindung werden nun anhand der Zeichnung, die Ausführungsbeispiele darstellt, näher beschrieben. Dabei zeigen
Fig. 1 und Fig. 2 Seitenansichten einer ersten Ausführungsform eines Spikes,
Fig. 3 eine Draufsicht auf den Spike gemäß der ersten Ausführungsform,
Fig. 4 und Fig. 5 Schnittdarstellungen entlang der Linien IV-IV und V-V der Fig. 3,
Fig. 6 einen Schnitt entlang der Linie VI-VI der Fig. 4,
Fig. 7 und Fig. 8 Seitenansichten einer zweiten Ausführungsform eines erfindungsgemäßen Spikes,
Fig. 9 eine Draufsicht auf den Spike gemäß der zweiten Ausführungsform,
Fig. 10 und Fig. 11 Schnittdarstellungen entlang der Linien X-X und XI-XI der Fig. 9,
Fig. 12 einen Schnitt entlang der Linie XII-XII der Fig. 10 und
Fig. 13 bis 16 Ansichten eines Spikepins,

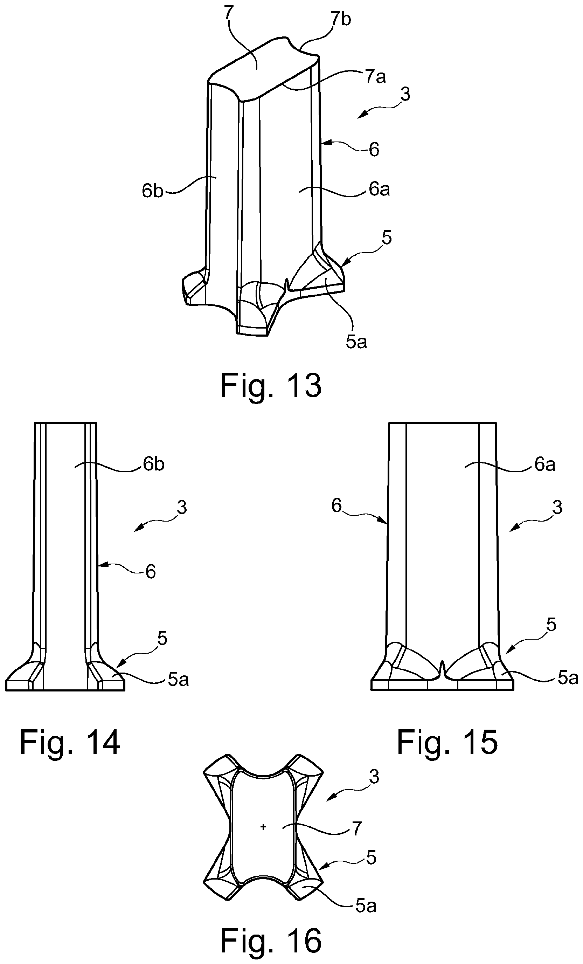

Fig. 13 eine Schrägansicht,
Fig. 14 und Fig. 15 Seitenansichten und
Fig. 16 eine Draufsicht.

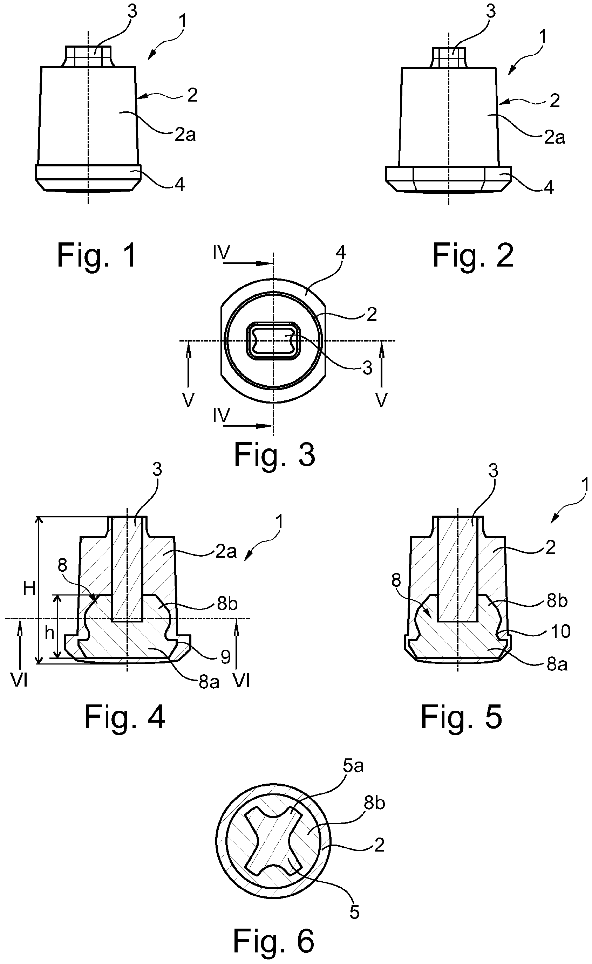

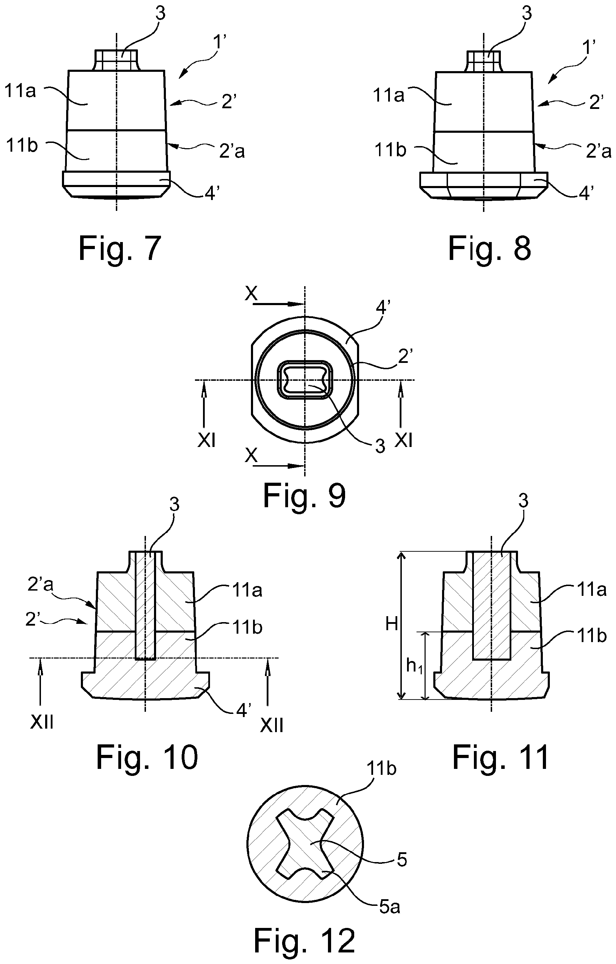

Die in den Figuren gezeigten Spikes 1 (Fig. 1 bis Fig. 6) und 1' (Fig. 7 bis Fig. 12) bestehen grundsätzlich aus einem Spikekörper 2, 2' und einem Spikepin 3. Bei den in den Figuren gezeigten beispielhaften Ausführungen besteht der Spikekörper 2, 2' aus einem kreiszylindrischen oder annähernd kreiszylindrischen Körperteil 2a, 2'a, welcher auf einem Fußflansch 4, 4' sitzt, welcher in Draufsicht eine annähernd ovale Form mit zwei in der längeren Erstreckung des Ovals und parallel zueinander verlaufenden Seitenflächen aufweist. Der Körperteil 2a, 2a' ist mittig auf dem Fußflansch 4, 4' angeordnet, sein Durchmesser entspricht im Wesentlichen der Breite des Fußflansches 4, 4'.

Eine bevorzugte Ausgestaltung des insbesondere aus Hartmetall bestehenden Spikepins 3, wie er in beiden Spikes 1, 1' enthalten ist, wird nun anhand der Figuren 13 bis 16 näher beschrieben. Der Spikepin 3 besteht aus einem Fuß 5 und einem langgestreckten Pinabschnitt 6. Bei der gezeigten Ausführung weist der Pinabschnitt 6 einen über seine Erstreckung gleichbleibenden Querschnitt auf. Die Querschnittsfläche und die Deckfläche 7 am freien Ende des Pinabschnittes 6 sind angenähert viereckig mit zwei gleich ausgeführten längeren Seiten 7a, die im Wesentlichen gerade und parallel zueinander verlaufen und über Rundungen in zwei kürzere Seiten 7b übergehen, die nach innen gebogen sind. In Folge der nach innen gebogenen kurzen Seiten 7b weist der Pinabschnitt 6 schmälere Seitenflächen 6b auf, die ebenfalls leicht nach innen gebogen sind. Die breiteren Seitenflächen 6a des Pinabschnittes 6 sind weitgehend ebene Flächen, sie können jedoch ebenfalls nach innen gebogen ausgebildet sein. Der Fuß 5 des Spikepins 3 weist vier an den Eckbereichen und zwischen den Seitenflächen 6a, 6b vorspringende Fußelemente 5a auf, die als Verankerungselemente zur sicheren Verankerung im Material des Spikekörpers 2, 2' dienen. Bei der gezeigten Ausführung weisen die Fußelemente 5a schräg ansteigende Übergangsflächen zum Pinabschnitt 6 des Spikepins 3 auf. Die dargestellte Ausführung ist nur eine von vielen möglichen Ausführungen von Fußelementen. Zusätzlich oder alternativ kann der Spikepin 3 mit Hinterschnitten, beispielsweise an umlaufenden Rillen, versehen sein.

Bei der in den Figuren 1 bis 5 gezeigten Ausführung ist im Spikekörper 2 ein Einsatz 8 enthalten, welcher einen den Fußflansch 4 mitbildenden Fußteil 8a und einen bei der gezeigten Ausführung pilzkopfartig gestalteten Pinhalter 8b aufweist, in dessen Mitte der Spikepin 3 verankert ist. Mit einem Endabschnitt überragt der Spikepin 3 den Spikekörper 2. Der Fußteil 8a des Einsatzes 8 ist von einer Schicht des Materials des Körperteils 2a umhüllt und bildet gemeinsam mit dieser Umhüllung 9 den Fuß flansch 4. Der pilzkopfartig geformte Pinhalter 8b bildet an seinem Übergangsbereich zum Fußteil 8a an einer rillenartig umlaufenden Vertiefung einen Hinterschnitt 10.

Der Einsatz 8 besteht aus einem Kunststoff, und zwar entweder aus einem Duroplast - einem gehärteten Kunstharz - oder einem Thermoplast. Aus der Gruppe der Duroplaste kommen beispielsweise Phenolharz, Epoxidharz oder Polyesterharz in Frage. Aus der Gruppe der Thermoplaste kommen beispielsweise ABS (Acrylnitril-Butadien-Styrol-Copolymer), PA (Polyamide), PE (Polyethylen) und PP (Polypropylen) in Frage.

Der Spikekörper 2 mitsamt Umhüllung 9 besteht aus einem schnittbeständigen und abriebbeständigen Gummimaterial oder aus einem thermoplastischen Vulkanisat, welches ebenfalls diese Eigenschaften aufweist.

Bei der Herstellung des Spikes 1 wird der Spikepin 3 mit dem Kunststoffmaterial für den Einsatz 8 in einer Form umspritzt. Nach dem Aushärten des Einsatzes 8 werden der Einsatz 8 und der Spikepin 3 außenseitig mit einem Haftvermittler für Gummi beschichtet, beispielsweise mit Chemosil ®, und anschließend mit einer Kautschukmischung oder mit einem thermoplastischen Vulkanisat umspritzt und derart der Spikekörper 2 mitsamt der Umhüllung 9 gebildet, wobei eine Kautschukmischung anschließend vulkanisiert wird. Dabei kann, wie es die Schnittdarstellungen in Fig. 4 und Fig. 5 zeigen, auch der den Spikekörper 2 überragende Endabschnitt des Spikepins 3 zumindest außenseitig mitummantelt werden.

Mischungszusammensetzungen zur Herstellung schnittbeständiger und abriebbeständiger Gummimaterialen sind dem Reifenfachmann hinlänglich bekannt.

Ein thermoplastisches Vulkanisat ist ein Blend aus zumindest einem Thermoplast und einem Elastomer, wobei der Thermoplast eine kontinuierliche Phase und das Elastomer eine in dieser fein verteilte disperse Phase bildet. In einem thermoplastischen Vulkanisat sind daher Elastomerpartikel vom Thermoplast umgeben. Bei der Herstellung von thermoplastischen Vulkanisaten wird zumindest ein Kautschuk mit zumindest einem Thermoplast reaktiv compoundiert, wobei die sich bildende Kautschukmischung phasenselektiv vernetzt wird, sodass sich aus dieser das Elastomer bildet. Die Herstellung erfolgt bevorzugter Weise in einem Scherfeld ("dynamische Vulkanisation"). Der die kontinuierliche Phase bildende Thermoplast ist schmelzbar, sodass thermoplastische Vulkanisate beispielsweise mittels Spritzguss verarbeitbar sind.

Der Thermoplast ist bzw. enthält insbesondere zumindest einen Thermopalst aus der Gruppe Polyurethan (PU), Polypropylen (PP), Polystyrol (PS), Polyamid (PA) oder Acrylnitril-Butadien-Styrol-Copolymer (ABS). Die Kautschukmischung des Elastomers enthält als Kautschuk zumindest einen der Kautschuke aus der Gruppe Naturkautschuk (NR), synthetisches Polyisopren (IR), Polybutadien (BR), Styrol-Butadien-Kautschuk (SBR) und Nitril-Butadien-Kautschuk (NBR).

Ein Spikekörper 2, welcher mitsamt den ummantelnden Schichten aus einem thermoplastischen Vulkanisat besteht, besteht daher aus einem abriebfesten Material, welches diesbezüglich sehr ähnliche Eigenschaften hat wie Gummimaterial von Laufstreifen.

Bei der in den Figuren 7 bis 12 gezeigten Ausführungsform besteht der Körperteil 2'a des Spikekörpers 2' des Spikes 1' aus einem Oberteil 11a und einem Unterteil 11b, wobei letzterer mit dem Fußflansch 4' einteilig ausgeführt ist und eine Höhe h₁ von 35 % bis 50 % der Spikehöhe H aufweist. Die Trennfläche zwischen dem Oberteil 11a und dem Unterteil 11b verläuft im gezeigten Bespiel horizontal, daher im rechten Winkel zur Erstreckung des Spikepins 3. Der Spikepin 3, welcher gemäß den Figuren 13 bis 16 ausgeführt ist, ist mit seinem den Fuß 5 aufweisenden Endabschnitt im Unterteil 11b verankert. Der Unterteil 11b besteht aus Hartgummi mit einer Härte Shore D gemäß DIN ISO 7619-1 von mindestens 50 oder aus einem Kunststoffmaterial, etwa einem solchen, wie es als Material für den Einsatz 8 der ersten Ausführungsform beschrieben ist. Der Oberteil 11a besteht aus einem abrieb- und schnittbeständigen Gummimaterial oder aus einem thermoplastischen Vulkanisat. Zur Herstellung des Spikes 1' wird der mit einem Haftvermittler beschichtete Spikepin 3 aus Hartmetall mit den fließfähigen, erhitzten Materialien für den Oberteil 11a und für den Unterteil 11b in einer entsprechenden Form umspritzt, die Materialien werden ausgehärtet bzw. vulkanisiert.

Bei einer alternativen, gesondert nicht dargestellten Ausführungsvariante der Erfindung kann der Spikekörper 2' aus mehr als zwei unterschiedlichen Materialien, beispielsweise drei unterschiedlichen Gummimaterialien, bestehen.

### Bezugsziffernliste

- 1, 1': Spike
- 2, 2: Spikekörper
- 2a, 2'a: Körperteil
- 3: Spikepin
- 4, 4': Fußflansch
- 5: Fuß
- 5a: Fußelement
- 6: Pinabschnitt
- 6a, 6b: Seitenfläche
- 7: Deckfläche
- 7a, 7b: Seiten
- 8: Einsatz
- 8a: Fußteil
- 8b: Pinhalter
- 9: Umhüllung
- 10: Hinterschnitt
- 11a: Oberteil
- 11b: Unterteil
- H, h₁: Höhe
- H: Spikehöhe

## Patentansprüche

1. Spike (1, 1') zum Verankern in einem Spikeloch eines Laufstreifens eines Fahrzeugluftreifens mit einem nicht metallischen Spikekörper (2, 2') mit einem Fußflansch (4, 4') und einem im Spikekörper (2, 2') verankerten Spikepin (3) aus Hartmetall, welcher mit seinem einen Endabschnitt den Spikekörper (2, 2') überragt und mit seinem zweiten Endabschnitt innerhalb des Spikekörpers (2, 2') in einem ersten Spikekörper-Teil (8, 11b) aus einem ersten, nicht metallischen Material verankert ist, wobei der innerhalb des Spikekörpers (2, 2') zwischen den Endabschnitten verlaufende Abschnitt des Spikepins (3) in zumindest einem weiteren Spikekörper-Teil (2a, 11a) aus einem zweiten, nicht metallischen Material gehalten ist,
**dadurch gekennzeichnet,**
**dass** der erste Spikekörper-Teil (8, 11b), in welchem der eine Endabschnitt des Spikepins (3) verankert ist, aus thermoplastischem oder duroplastischem Kunststoff oder aus Hartgummi besteht, wobei der weitere Spikekörper-Teil (2a, 11a), in welchem der innerhalb des Spikekörpers (2, 2') zwischen den Endabschnitten des Spikepins (3) verlaufende Abschnitt des Spikepins (3) gehalten ist, aus abrieb- und schnittbeständigem Gummimaterial oder aus einem thermoplastischen Vulkanisat besteht.

2. Spike (1) nach Anspruch 1, **dadurch gekennzeichnet, dass** der erste Spikekörper-Teil (8), in welchen der Endabschnitt des Spikepins (3) verankert ist, ein Einsatz (8) im Spikekörper (2) ist, welcher von Gummimaterial oder thermoplastischem Vulkanisat umhüllt ist.

3. Spike (1) nach Anspruch 2, **dadurch gekennzeichnet, dass** der Einsatz (8) einen Fußteil (8a) und einen Pinhalter (8b) aufweist, wobei der Fußteil (8a) gemeinsam mit seiner Umhüllung den Fußflansch (4) des Spikekörpers (2) bildet.

4. Spike (1) nach Anspruch 3, **dadurch gekennzeichnet, dass** der Pinhalter (8b) mit zumindest einem Hinterschnitt (10) versehen ist.

5. Spike (1) nach Anspruch 3 oder Anspruch 4, **dadurch gekennzeichnet, dass** der Pinhalter (8b) pilzkopfartig gestaltet ist und zum Fußteil (8a) einen rillenartig ausgebildeten Übergangsbereich aufweist.

6. Spike (1') nach Anspruch 1, **dadurch gekennzeichnet, dass** der Spikekörper (2') aus einem Oberteil (11a) und einem Unterteil (11b) besteht, wobei der Unterteil (11b) mit dem Fußflansch (4') einteilig ausgeführt ist und der erste Spikekörper-Teil (11b) ist, in welchem der Endabschnitt des Spikepins (3) verankert ist.

7. Spike (1') nach Anspruch 1 oder 6, **dadurch gekennzeichnet, dass** der Spikekörper (2') aus einem bzw. dem Oberteil (11a) und einem bzw. dem Unterteil (11b) besteht, wobei der Oberteil (11a) der weitere Spikekörper-Teil (11a) ist, in welchem der innerhalb des Spikekörpers (2') zwischen den Endabschnitten verlaufende Abschnitt des Spikepins (3) gehalten ist.

8. Spike (1') nach Anspruch 6 oder 7, **dadurch gekennzeichnet, dass** der Oberteil (11a) des Spikekörpers (2') aus einem einzigen Material oder aus zumindest zwei übereinander angeordneten Schichten aus unterschiedlichen Materialien besteht.

9. Spike (1') nach einem der Ansprüche 6 bis 8, **dadurch gekennzeichnet, dass** die Trennfläche zwischen dem Ober- und dem Unterteil (11a, 11b) senkrecht zum Spikepin (3) verläuft.

10. Spike (1') nach einem der Ansprüche 6 bis 9, **dadurch gekennzeichnet, dass** der Unterteil (11b) eine Höhe (h₁) von 30 % bis 40 % der Spikehöhe (H) aufweist.

11. Spike (1, 1') nach einem der Ansprüche 1 bis 10, **dadurch gekennzeichnet, dass** der im Spikekörper (2, 2') verankerte zweite Endabschnitt des Spikepins (3) mit zumindest einem Verankerungselement versehen ist.

12. Spike (1, 1') nach einem der Ansprüche 1 bis 11, **dadurch gekennzeichnet, dass** der thermoplastische Kunststoff zumindest ein Thermoplast aus der Gruppe Acrylnitril-Butadien-Styrol-Copolymer, Polyethylen, Polypropylen, Polystyrol oder Polyamid ist.

13. Spike (1, 1') nach einem der Ansprüche 1 bis 11, **dadurch gekennzeichnet, dass** der duroplastische Kunststoff Phenolharz, Epoxidharz oder Polyesterharz ist.

14. Spike (1, 1') nach einem der Ansprüche 1 bis 11, **dadurch gekennzeichnet, dass** der Thermoplast bzw. die Thermoplaste des thermoplastischen Vulkanisates aus der Gruppe Polyurethan, Polypropylen, Polystyrol, Polyamid und Acrylnitril-Butadien-Styrol-Copolymer stammt bzw. stammen.

15. Spike (1, 1') nach einem der Ansprüche 1 bis 11, **dadurch gekennzeichnet, dass** dem Elastomer des thermoplastischen Vulkanisates eine Kautschukmischung zu Grunde liegt, welche als Kautschuk(e) zumindest einen der Kautschuke aus der Gruppe Naturkautschuk (NR), synthetisches Polyisopren (IR), Polybutadien (BR), Styrol-Butadien-Kautschuk (SBR) und Nitril-Butadien-Kautschuk (NBR) enthält.

## Claims

1. Tyre stud (1, 1') for anchoring in a tyre stud hole of a tread of a pneumatic vehicle tyre, having a non-metallic tyre stud body (2, 2') with a base flange (4, 4'), and having a tyre stud pin (3) composed of hard metal anchored in the tyre stud body (2, 2'), which tyre stud pin projects with one end portion thereof beyond the tyre stud body (2, 2') and is anchored with its second end portion within the tyre stud body (2, 2') in a first tyre stud body part (8, 11b) composed of a first, non-metallic material, wherein that portion of the tyre stud pin (3) which extends within the tyre stud body (2, 2') between the end portions is held in at least one further tyre stud body part (2a, 11a) composed of a second, non-metallic material,
**characterized**
**in that** the first tyre stud body part (8, 11b), in which one end portion of the tyre stud pin (3) is anchored, consists of thermoplastic or thermosetting plastic or of hard vulcanized rubber, wherein the further tyre stud body part (2a, 11a), in which that portion of the tyre stud pin (3) which extends within the tyre stud body (2, 2') between the end portions of the tyre stud pin (3) is held, consists of abrasion-resistant and cut-resistant vulcanized rubber material or of a thermoplastic vulcanizate.

2. Tyre stud (1) according to Claim 1, **characterized in that** the first tyre stud body part (8), in which one end portion of the tyre stud pin (3) is anchored, is an insert (8) in the tyre stud body (2), which insert is encased by vulcanized rubber material or by thermoplastic vulcanizate.

3. Tyre stud (1) according to Claim 2, **characterized in that** the insert (8) has a base part (8a) and a pin holder (8b), wherein the base part (8a) forms, together with its casing, the base flange (4) of the tyre stud body (2).

4. Tyre stud (1) according to Claim 3, **characterized in that** the pin holder (8b) is provided with at least one undercut (10).

5. Tyre stud (1) according to Claim 3 or Claim 4, **characterized in that** the pin holder (8b) is of mushroom head-like form and has a groove-like transition region towards the base part (8a).

6. Tyre stud (1') according to Claim 1, **characterized in that** the tyre stud body (2') consists of an upper part (11a) and a lower part (11b), wherein the lower part (11b) is formed in one piece with the base flange (4') and is the first tyre stud body part (11b), in which one end portion of the tyre stud pin (3) is anchored.

7. Tyre stud (1') according to Claim 1 or 6, **characterized in that** the tyre stud body (2') consists of an or the upper part (11a) and a or the lower part (11b), wherein the upper part (11a) is the further tyre stud body part (11a), in which that portion of the tyre stud pin (3) which extends within the tyre stud body (2') between the end portions is held.

8. Tyre stud (1') according to Claim 6 or 7, **characterized in that** the upper part (11a) of the tyre stud body (2') consists of a single material or of at least two layers, arranged one above the other, of different materials.

9. Tyre stud (1') according to one of Claims 6 to 8, **characterized in that** the parting surface between the upper and lower parts (11a, 11b) extends perpendicularly to the tyre stud pin (3).

10. Tyre stud (1') according to one of Claims 6 to 9, **characterized in that** the lower part (11b) has a height (h₁) of 30% to 40% of the tyre stud height (H) .

11. Tyre stud (1, 1') according to one of Claims 1 to 10, **characterized in that** the second end portion, anchored in the tyre stud body (2, 2'), of the tyre stud pin (3) is provided with at least one anchoring element.

12. Tyre stud (1, 1') according to one of Claims 1 to 11, **characterized in that** the thermoplastic is at least a thermoplastic from the group comprising acrylonitrile butadiene styrene copolymer, polyethylene, polypropylene, polystyrene or polyamide.

13. Tyre stud (1, 1') according to one of Claims 1 to 11, **characterized in that** the thermosetting plastic is phenol resin, epoxy resin or polyester resin.

14. Tyre stud (1, 1') according to one of Claims 1 to 11, **characterized in that** the thermoplastic(s) of the thermoplastic vulcanizate comes/come from the group comprising polyurethane, polypropylene, polystyrene, polyamide and acrylonitrile butadiene styrene copolymer.

15. Tyre stud (1, 1') according to one of Claims 1 to 11, **characterized in that** the elastomer of the thermoplastic vulcanizate is based on an unvulcanized rubber mixture which, as the unvulcanized rubber(s), contains at least one of the unvulcanized rubbers from the group comprising natural rubber (NR), synthetic polyisoprene (IR), polybutadiene (BR), styrene butadiene rubber (SBR) and nitrile butadiene rubber (NBR).

## Revendications

1. Crampon (1, 1') pour ancrage dans un trou de crampon d'une bande de roulement d'un pneumatique de véhicule, comportant un corps de crampon non métallique (2,2') comportant un rebord de base (4, 4') et un ergot de crampon (3) en un métal dur, ancré dans le corps de crampon (2, 2'), ergot qui, par l'une de ses portions terminales, dépasse du corps de crampon (2, 2') et qui par sa deuxième portion terminale est ancré à l'intérieur du corps de crampon (2, 2') dans une première partie (8, 11b), en un premier matériau non métallique, du corps de crampon, la portion de l'ergot de crampon (3) courant à l'intérieur du corps de crampon (2, 2') entre les portions terminales étant maintenue dans au moins une partie supplémentaire (2a, 11a), en un second matériau non métallique, du corps de crampon,
**caractérisé en ce que** la première partie (8, 11b) du corps de crampon, dans laquelle est ancrée l'une des portions terminales de l'ergot de crampon (3), est constituée d'un matériau thermoplastique ou thermodurcissable ou de caoutchouc durci, la partie supplémentaire (2a, 11a) du corps de crampon, dans laquelle est maintenue la portion de l'ergot de crampon (3) courant à l'intérieur du corps de crampon (2, 2') entre les portions terminales de l'ergot de crampon (3), étant constituée d'un matériau de type caoutchouc, résistant à l'abrasion et aux coupures, ou en un vulcanisat thermoplastique.

2. Ergot (1) selon la revendication 1, **caractérisé en ce que** la première partie (8) du corps de crampon, dans laquelle est ancrée la portion terminale de l'ergot de crampon (3), est un insert (8) dans le corps de crampon (2), qui est enveloppé d'un matériau de type caoutchouc ou d'un vulcanisat thermoplastique.

3. Crampon (1) selon la revendication 2, **caractérisé en ce que** l'insert (8) présente une partie de base (8a) et un support d'ergot (8b), la partie de base (8a) formant, conjointement avec son enveloppe, le rebord de base (4) du corps de crampon (2).

4. Crampon (1) selon la revendication 3, **caractérisé en ce que** le support d'ergot (8b) est pourvu d'au moins une contre-dépouille (10).

5. Crampon (1) selon la revendication 3 ou la revendication 4, **caractérisé en ce que** le support d'ergot (8b) a la forme d'un chapeau de champignon et présente, vers la partie de base (8a), une zone de transition en forme de rainure.

6. Crampon (1') selon la revendication 1, **caractérisé en ce que** le corps de crampon (2') est constitué d'une partie supérieure (11a) et d'une partie inférieure (11b), la partie inférieure (11b) étant réalisée d'une seule pièce avec le rebord de base (4') et étant la première partie (11b) du corps de crampon, dans laquelle la portion terminale de l'ergot de crampon (3) est ancrée.

7. Crampon (1') selon la revendication 1 ou 6, **caractérisé en ce que** le corps de crampon (2') est constitué d'une ou de la partie supérieure (11a) et d'une ou de la partie inférieure (11b), la partie supérieure (11a) étant la partie supplémentaire (11a) du corps de crampon, dans laquelle est maintenue la portion de l'ergot de crampon (3) courant à l'intérieur du corps de crampon (2') entre les portions terminales.

8. Crampon (1') selon la revendication 6 ou 7, **caractérisé en ce que** la partie supérieure (11a) du corps de crampon (2') est constituée d'un matériau unique ou d'au moins deux couches, superposées, de matériaux différents.

9. Crampon (1') selon l'une des revendications 6 à 8, **caractérisé en ce que** la surface de séparation entre la partie supérieure et la partie inférieure (11a, 11b) court perpendiculairement à l'ergot de crampon (3).

10. Crampon (1') selon l'une des revendications 6 à 9, **caractérisé en ce que** la partie inférieure (11b) présente une hauteur (h₁) de 30 % à 40 % de la hauteur (H) du crampon.

11. Crampon (1, 1') selon l'une des revendications 1 à 10, **caractérisé en ce que** la seconde portion terminale de l'ergot de crampon (3), ancrée dans le corps de crampon (2, 2'), est pourvue d'au moins un élément d'ancrage.

12. Crampon (1, 1') selon l'une des revendications 1 à 11, **caractérisé en ce que** le plastique thermoplastique est au moins un thermoplastique du groupe copolymère acrylonitrile-butadiène-styrène, polyéthylène, polypropylène, polystyrène ou polyamide.

13. Crampon (1, 1') selon l'une des revendications 1 à 11, **caractérisé en ce que** le plastique thermodurcissable est une résine phénolique, une résine époxyde ou une résine de polyester.

14. Crampon (1, 1') selon l'une des revendications 1 à 11, **caractérisé en ce que** le thermoplastique ou les thermoplastiques du vulcanisat thermoplastique proviennent du groupe polyuréthane, polypropylène, polystyrène, polyamide et copolymère acrylonitrile-butadiène-styrène.

15. Crampon (1, 1') selon l'une des revendications 1 à 11, **caractérisé en ce que** l'élastomère du vulcanisat thermoplastique est à base d'un mélange de caoutchoucs qui contient en tant que caoutchouc (s) au moins l'un des caoutchoucs du groupe caoutchouc naturel (NR), polyisoprène synthétique (IR), polybutadiène (BR), caoutchouc styrène-butadiène (SBR) et caoutchouc nitrile-butadiène (NBR).
